# EUROPEAN PATENT SPECIFICATION

(11) **EP 4 389 707 B1**
(45) Date of publication and mention of the grant of the patent: **28.05.2025**
(21) Application number: 23216801.3
(22) Date of filing: 14.12.2023
(51) Int. Cl.: C01G 1/10, C01G 49/14

(54) **METHOD FOR RECYCLING FERROUS SULFATE HEPTAHYDRATE AND SULFURIC ACID FROM WASTE ACID IN TITANIUM DIOXIDE PRODUCTION**
VERFAHREN ZUR WIEDERVERWERTUNG VON EISEN(II)-SULFATHEPTAHYDRAT UND SCHWEFELSÄURE AUS ABFALLSÄURE BEI DER TITANDIOXIDHERSTELLUNG
PROCÉDÉ DE RECYCLAGE D'HEPTAHYDRATE DE SULFATE FERREUX ET D'ACIDE SULFURIQUE À PARTIR D'ACIDE RÉSIDUAIRE DANS LA PRODUCTION DE DIOXYDE DE TITANE

(30) Priority: 14.12.2022 CN 202211598908
(43) Date of publication of application: 26.06.2024
(73) Proprietor: Panzhihua HaifengXin Chemical Industry Co., Ltd., Panzhihua, Sichuan Province 617064 (CN)
(72) Inventor: Jiang, Ge, Panzhihua, Sichuan Province, 617064 (CN); Ma, Mingjian, Panzhihua, Sichuan Province, 617064 (CN); Liu, Hongjin, Panzhihua, Sichuan Province, 617064 (CN); Xu, Tianlong, Panzhihua, Sichuan Province, 617064 (CN); Guo, Hongdan, Panzhihua, Sichuan Province, 617064 (CN)
(74) Representative: Gleim Petri Patent- und Rechtsanwaltspartnerschaft mbB

(56) References cited:
- CN-A- 108 840 373
- CN-B- 102 910 594

## Description

### TECHNICAL FIELD

The present disclosure relates to the technical field of resource recovery, and specifically relates to a method for recycling ferrous sulfate heptahydrate and sulfuric acid from a waste acid in titanium dioxide production.

### BACKGROUND

A mainstream production process of titanium dioxide in China is the sulfuric acid method. 1 t of TiO₂ produced can generate 6 t to 8 t of waste acid, which has an acid concentration of 18% to 30% and includes ferrous sulfate with a concentration of 8% to 17% as well as a certain amount of the TiO₂ and metal sulfates in addition to H₂SO₄. Direct neutralization of the waste acid not only wastes a large amount of resources, but also produces a large amount of red gypsum to be stored in landfills and high-salt wastewater to be discharged, causing secondary pollution of the water environment. Therefore, the direct neutralization cannot truly solve environmental problems. As a result, it has always been a technical problem facing titanium dioxide production workers and environmental protection workers to effectively recycle this type of waste acid.

The waste acid in titanium dioxide production is mainly treated by single evaporation and concentration in China. Specifically, the waste acid is directly evaporated and concentrated to 45% to 70%, compounded with concentrated sulfuric acid, and then returned to the ilmenite leaching section to realize the recovery of acid components. However, this process may produce ferrous sulfate monohydrate with high impurity content and viscosity, and disposal of this type of low-quality ferrous sulfate monohydrate is also a headache faced by enterprises. The single evaporation and concentration only recovers sulfuric acid, causing the ferrous sulfate to be lost as a waste, and requires extremely high energy consumption. In recent years, with the rapid rise of domestic new energy vehicles, lithium iron phosphate has become one of the main materials for battery cathodes. One of the raw materials for preparing a battery precursor ferric phosphate is ferrous sulfate, such that there is an increasing demand for ferrous sulfate in the market. In the past, the ferrous sulfate was only an impurity that needed to be removed, and effective recovery was not taken seriously. Accordingly, it is bound to bring great economic and environmental benefits to enterprises and reduce huge burdens by seeking a technical means that can simultaneously recycle ferrous sulfate and sulfuric acid while saving a large amount of steam efficiency.

Patent CN105439105A disclosed a method of recycling waste acid in titanium dioxide production using a solid-liquid membrane separation + freezing crystallization + nanofiltration membrane separation process, to recover metatitanic acid, ferrous sulfate, and 70% of finished sulfuric acid. Although the process recycles various products, only partial recovery is completed; while a nanofiltration concentrate, which accounts for 25% to 35% of an original waste acid volume, does not undergo resource disposal. Based on the engineering application experience and experimental data of freezing crystallization and the proficient application of nanofiltration membrane technology, the process has a recovery rate on the ferrous sulfate of less than 70%.

Patent CN111517397A disclosed a three-stage negative-pressure evaporation and crystallization process. The process adopts a staged treatment of waste acid, including: conducting freezing crystallization to obtain ferrous sulfate heptahydrate, conducting double-effect evaporation and concentration + freezing crystallization to obtain metal sulfate crystals, and then subjecting secondary freezing crystallization mother liquor to single-effect evaporation and concentration + freezing crystallization to obtain metal sulfate crystals and 70% of finished acid. This process is intended to overcome the heater clogging during waste acid concentration. Based on the experiences from freezing crystallization of titanium liquid and concentration of waste acid in titanium dioxide production for ages, this process shows the following three shortcomings. On one hand, the three-stage repeated process from high temperature to low temperature is bound to consume extremely high energy. On the other hand, the segmented partial removal of calcium, magnesium, and iron may inevitably lead to the heater clogging. Furthermore, there is a recovery rate on the ferrous sulfate of less than 60%, and the second and third stages of concentration and crystallization mainly produce miscellaneous metal sulfates.

CN102910594 discloses a method for recycling iron (II) sulfate and sulfuric acid from waste acid TiO2 production by using heat from the TiO2 roaster. The recycling method comprises the following steps: applying water absorbing agent under room temperature and normal pressure under stirring to the waste acid including ferrous sulfate/magnesium sulfate/manganese sulfate and controlling the temperature at 40°C-60°C; cooling the suspension to room temperature, separating the water hydrate crystals by solid-liquid separation, which is a heat exchanger and obtaining a filtrate having a higher sulphuric acid concentration; the filtrate is subjected to freezing to -5°C to 10°C, so that the ferrous sulfate heptahydrate is precipitated in the solution and the solid solution of the ferrous sulfate heptahydrate is separated by solid-liquid separation and the spent acid is further concentrated; these steps might be repeated until the concentration of the sulfuric acid reaches 60 % by mass; exhaust gas of the roasting furnace is used to heat and dehydrated the water absorbing agent hydrate to regenerate the water absorbing agent; the water vapour is cooled by the room temperature waste acid partition wall and returned to the pickling process to be used for the titanium acid washing water. The filter cake comprises Ti, Mn,Mg and is further recovered; the sulfuric acid is sent to the acid hydrolysis step for recycling. The waste heat of the calcining furnace is obtained after the hot gas of the rotary kiln head and kiln tail is removed from the cyclone separator.

### SUMMARY

An objective of the present disclosure is to provide a method for recycling ferrous sulfate heptahydrate and sulfuric acid from a waste acid in titanium dioxide production. The method saves energy consumption, has a high system recovery rate of ferrous sulfate and a high purity of ferrous sulfate heptahydrate, and can provide a finished acid with a concentration that meets the demand.

The objective of the present disclosure is achieved as follows: The present disclosure provides a method for recycling ferrous sulfate heptahydrate and sulfuric acid from a waste acid in titanium dioxide production, including the following steps:
step 1: pre-concentrating the waste acid in titanium dioxide production to obtain a pre-concentrated acid;
step 2: cooling the pre-concentrated acid by a heat exchanger, and conducting freezing crystallization for a period of time to obtain the ferrous sulfate heptahydrate and a crystallization mother liquor;
step 3: concentrating the crystallization mother liquor in a waste acid evaporation system to obtain precipitated miscellaneous salt-containing suspended concentrated acid and evaporation condensed water; and
step 4: subjecting the precipitated miscellaneous salt-containing suspended concentrated acid to maturing and cooling, and then transferring a resulting product into a filter press dehydration system to allow a treatment to obtain a metal miscellaneous salt filter cake and a filtered finished acid; where the metal miscellaneous salt filter cake serves as a raw material for extracting precious metals including titanium, manganese, magnesium, scandium, and vanadium as well as iron to allow resource recovery, and the filtered finished acid is returned to an ilmenite acid hydrolysis section;
wherein in step 1, the pre-concentrating is conducted by rotary kiln flue gas spraying, the rotary kiln flue gas spraying in series with flash evaporation, or a combination of the flash evaporation, the rotary kiln flue gas spraying, and the flash evaporation in sequence; and the rotary kiln flue gas spraying concentrates the waste acid in titanium dioxide production to 27.86% to 29.4%.

In the present disclosure, the waste acid in titanium dioxide production is at least one selected from the group consisting of a waste acid produced after high-pressure filtration of hydrolyzed metatitanic acid, a waste acid produced after adiabatic flash and the high-pressure filtration of the hydrolyzed metatitanic acid, and a waste acid produced after direct filtration of the hydrolyzed metatitanic acid on blades of a leaf filter; and the waste acid in titanium dioxide production has an acid concentration of 20.38% to 25.05% and a ferrous sulfate concentration of 12.25% to 15.33% in step 1.

In the present disclosure, a rotary kiln flue gas is at 300°C to 450°C, and the waste acid in titanium dioxide production pre-concentrated by the rotary kiln flue gas spraying is at 75°C to 85°C in step 1.

In the present disclosure, a device for the freezing crystallization includes the heat exchanger, a refrigeration unit, a crystallization tank, a centrifuge or a disc filter, a pump unit, and a tank body; and a cold source for the freezing crystallization includes a crystallization completion liquid of 0°C to 10°C and a water chilling unit in step 2.

In the present disclosure, the freezing crystallization is conducted at 2°C to 12°C for 0.5 h to 3 h; the ferrous sulfate heptahydrate has a grade of 80.2% to 87.8%; and the crystallization mother liquor has an acid concentration increased to 29.91% to 45.91% in step 2.

In the present disclosure, the waste acid evaporation system in step 3 has a concentration device provided with a preheater, a heater, a cooler, a condenser, an evaporator, a maturation cooling tank, a pump unit, and a tank body, and a heat source for evaporation is waste heat derived from a primary steam, a tail gas of titanium dioxide calcination, or a tail gas of acid hydrolysis; and the filter press dehydration system in step 4 is a filtration device being one selected from the group consisting of a membrane filter press, a centrifuge, and a belt filter press combined with supporting facilities thereof.

In the present disclosure, the waste acid evaporation system has an effective number of 1 to 3; and the evaporation condensed water has an acid concentration of less than 0.5%.

In the present disclosure, the precipitated miscellaneous salt-containing suspended concentrated acid has an acid concentration of 50% to 85%.

In the present disclosure, the filtered finished acid obtained in step 4 is pumped into a freezing crystallization system to allow the freezing crystallization at 4°C for 2.0 h to obtain a ferrous sulfate heptahydrate crystal; a resulting freezing crystallization mother liquor is collected into an evaporation feed tank and then pumped into a double-effect evaporation device to obtain an acid-salt suspension concentrate; and the acid-salt suspension concentrate overflows to a maturation cooling tank to allow standing for approximately 10 h, and is then pumped into a membrane filter press through a screw to obtain 85% of a finished acid and the metal miscellaneous salt filter cake.

The present disclosure combines the waste heat from a large amount of high-temperature rotary kiln exhaust gas produced by titanium dioxide enterprises, the high-quality ferrous sulfate heptahydrate obtained by freezing crystallization, and the solubility of ferrous sulfate in a sulfuric acid system. The present disclosure proposes a relatively-single multi-effect evaporation and concentration method for a waste acid in titanium dioxide production that contains high concentrations of ferrous sulfate and sulfuric acid. The method can save energy consumption by not less than 50%, and simultaneously recover the ferrous sulfate with high system recovery rate, ferrous sulfate heptahydrate with high purity, and finished acid with a concentration that meets customer demands.

The present disclosure also has the following advantages:
1. The process of "pre-concentrating the waste acid in titanium dioxide production and then conducting freezing crystallization" is better than the process of "conducting freezing crystallization, and then transferring to kiln tail gas for concentration". Since the acid concentration and the ferrous sulfate concentration are both increased, according to a rule "the greater the acid concentration, the lower the solubility of ferrous sulfate", favorable conditions are created for subsequent freezing crystallization to obtain ferrous sulfate with the high recovery rate and high grade.
2. Pre-concentration and/or flash evaporation of the rotary kiln tail gas removes part of water, and there is the high recovery rate of ferrous sulfate as mentioned in Advantage 1, such that more ferrous sulfate heptahydrate is precipitated for taking away more iron salts and moisture, thus further increasing the acid concentration. Finally, the acid entering the waste acid concentration system has a concentration starting point that reaches a high value, thereby minimizing the amount of evaporated water required by the subsequent waste acid evaporation and concentration device and saves steam consumption.
3. In the present disclosure, the ferrous sulfate heptahydrate with high purity and high recovery rate and finished acid that meets customer demands can be obtained simultaneously. In addition, a metal miscellaneous salt-enriched filter cake with low ferrous sulfate content can also be obtained separately, and is used for the comprehensive utilization of rare and precious metals such as vanadium, scandium, and manganese.
4. In the present disclosure, the emission of gypsum slag is reduced while recycling ferrous sulfate and waste acid by more than 90% on the original basis, thereby achieving near-zero emission of gypsum slag produced by the sulfuric acid method from titanium dioxide.

The present disclosure is described in more detail hereinafter with reference to the accompanying drawings and specific embodiments.

### BRIEF DESCRIPTION OF THE DRAWINGS

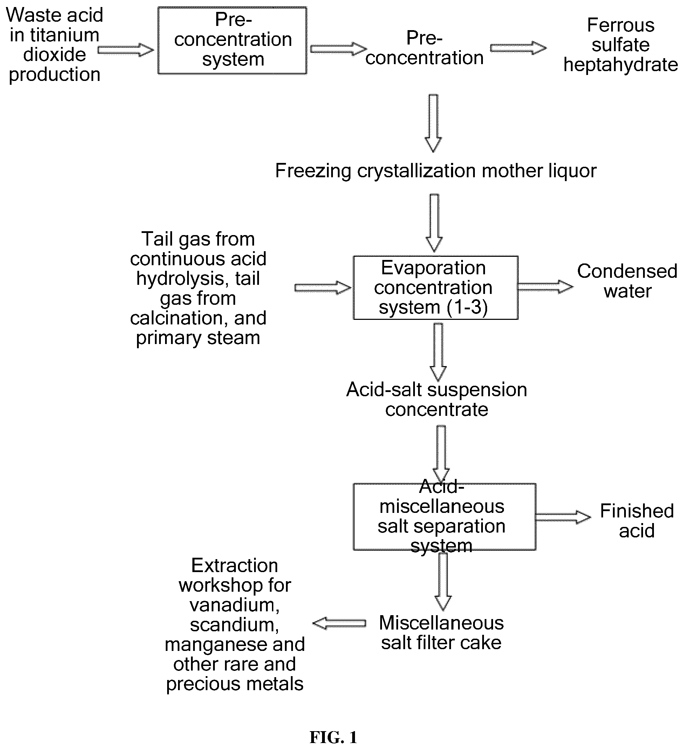

FIG. 1 shows a schematic diagram of a working flow in the present disclosure.

### DETAILED DESCRIPTION OF THE EMBODIMENTS

The examples of the present disclosure are described in detail below with reference to the drawings.

The present disclosure provides a method for recycling ferrous sulfate heptahydrate and sulfuric acid from a waste acid in titanium dioxide production, including the following steps:
step 1: pre-concentrating the waste acid in titanium dioxide production to obtain a pre-concentrated acid;
step 2: cooling the pre-concentrated acid by a heat exchanger, and conducting freezing crystallization for a period of time to obtain the ferrous sulfate heptahydrate and a crystallization mother liquor;
step 3: concentrating the crystallization mother liquor in a waste acid evaporation system to obtain precipitated miscellaneous salt-containing suspended concentrated acid and evaporation condensed water; and
step 4: subjecting the precipitated miscellaneous salt-containing suspended concentrated acid to maturing and cooling, and then transferring a resulting product into a filter press dehydration system to allow a treatment to obtain a metal miscellaneous salt filter cake and a filtered finished acid; where the metal miscellaneous salt filter cake serves as a raw material for extracting precious metals including titanium, manganese, magnesium, scandium, and vanadium as well as iron to allow resource recovery, and the filtered finished acid is returned to an ilmenite acid hydrolysis section.

**In** the present disclosure, the waste acid in titanium dioxide production is at least one selected from the group consisting of a waste acid produced after high-pressure filtration of hydrolyzed metatitanic acid, a waste acid produced after adiabatic flash and the high-pressure filtration of the hydrolyzed metatitanic acid, and a waste acid produced after direct filtration of the hydrolyzed metatitanic acid on blades of a leaf filter; and the waste acid in titanium dioxide production has an acid concentration of 20.38% to 25.05% and a ferrous sulfate concentration of 12.25% to 15.33% in step 1.

In the present disclosure, the pre-concentrating is conducted by rotary kiln flue gas spraying, the rotary kiln flue gas spraying in series with flash evaporation, or a combination of the flash evaporation, the rotary kiln flue gas spraying, and the flash evaporation in sequence; and the rotary kiln flue gas spraying concentrates the waste acid in titanium dioxide production to 27.86% to 29.4%.

In the present disclosure, a rotary kiln flue gas is at 300°C to 450°C, and the waste acid in titanium dioxide production pre-concentrated by the rotary kiln flue gas spraying is at 75°C to 85°C in step 1.

In the present disclosure, a device for the freezing crystallization includes the heat exchanger, a refrigeration unit, a crystallization tank, a centrifuge or a disc filter, a pump unit, and a tank body; and a cold source for the freezing crystallization includes a crystallization completion liquid of 0°C to 10°C and a water chilling unit in step 2.

In the present disclosure, the freezing crystallization is conducted at 2°C to 12°C for 0.5 h to 3 h; the ferrous sulfate heptahydrate has a grade of 80.2% to 87.8%; and the crystallization mother liquor has an acid concentration increased to 29.91% to 45.91% in step 2.

In the present disclosure, the waste acid evaporation system in step 3 has a concentration device provided with a preheater, a heater, a cooler, a condenser, an evaporator, a maturation cooling tank, a pump unit, and a tank body, and a heat source for evaporation is waste heat derived from a primary steam, a tail gas of titanium dioxide calcination, or a tail gas of acid hydrolysis; and the filter press dehydration system in step 4 is a filtration device being one selected from the group consisting of a membrane filter press, a centrifuge, and a belt filter press combined with supporting facilities thereof.

In the present disclosure, the waste acid evaporation system has an effective number of 1 to 3; and the evaporation condensed water has an acid concentration of less than 0.5%.

In the present disclosure, the precipitated miscellaneous salt-containing suspended concentrated acid has an acid concentration of 50% to 85%.

In the present disclosure, the filtered finished acid obtained in step 4 is pumped into a freezing crystallization system to allow the freezing crystallization at 4°C for 2.0 h to obtain a ferrous sulfate heptahydrate crystal; a resulting freezing crystallization mother liquor is collected into an evaporation feed tank and pumped into a double-effect evaporation device to obtain an acid-salt suspension concentrate; and the acid-salt suspension concentrate overflows to a maturation cooling tank to allow standing for approximately 10 h, and is then pumped into a membrane filter press through a screw to obtain 85% of a finished acid and the metal miscellaneous salt filter cake.

### Example 1:

A waste acid in titanium dioxide production had an acid concentration of 22.5%, a ferrous sulfate content of 12.66%, and an SS content of 100 mg/L; the waste acid in titanium dioxide production was pumped to a Venturi tower to allow direct-contact heat exchange, evaporation, and pre-concentration with a 400°C rotary kiln tail gas, to obtain a pre-concentrated acid at 80°C with an acid concentration increased to 29.4% and a ferrous sulfate concentration of 16.71%; the pre-concentrated acid was then pumped into a freezing crystallization system to allow freezing crystallization at 5°C for 2.0 h to obtain ferrous sulfate heptahydrate crystals with a grade of 86.2% and a recovery rate on ferrous sulfate of 90.3% after sampling detection; while a resulting freezing crystallization mother liquor had an acid concentration of 40.3% and a ferrous sulfate concentration of 2.5%; the freezing crystallization mother liquor was collected into an evaporation feed tank and then pumped into a double-effect evaporation device to obtain an acid-salt suspension concentrate; the acid-salt suspension concentrate overflowed to a maturation cooling tank to allow standing for approximately 11 h, and was then pumped by a screw into a membrane filter press to obtain 82% of a finished acid and a metal miscellaneous salt filter cake.

### Example 2:

A waste acid in titanium dioxide production had an acid concentration of 24.13%, a ferrous sulfate content of 15.11%, and an SS content of 112 mg/L; the waste acid in titanium dioxide production was pumped to a Venturi tower to allow direct-contact heat exchange, evaporation, and pre-concentration with a 360°C rotary kiln tail gas, to obtain a pre-concentrated acid at 50°C with an acid concentration increased to 30.1% and a ferrous sulfate concentration of 19.44%; the pre-concentrated acid was then pumped into a freezing crystallization system to allow freezing crystallization at 5°C for 2.0 h to obtain ferrous sulfate heptahydrate crystals with a grade of 87.6% and a recovery rate on ferrous sulfate of 92% after sampling detection; while a resulting freezing crystallization mother liquor had an acid concentration of 45.91% and a ferrous sulfate concentration of 2.22%; the freezing crystallization mother liquor was collected into an evaporation feed tank and then pumped into a double-effect evaporation device to obtain an acid-salt suspension concentrate; the acid-salt suspension concentrate overflowed to a maturation cooling tank to allow standing for approximately 10 h, and was then pumped by a screw into a membrane filter press to obtain 75% of a finished acid and a metal miscellaneous salt filter cake.

**Example 3:** A waste acid in titanium dioxide production had an acid concentration of 24.05%, a ferrous sulfate content of 13.78%, and an SS content of 102 mg/L; the waste acid in titanium dioxide production was pumped to a Venturi tower to allow direct-contact heat exchange, evaporation, and pre-concentration with a 360°C rotary kiln tail gas, to obtain a pre-concentrated acid at 80°C with an acid concentration increased to 29.85% and a ferrous sulfate concentration of 16.56%; the pre-concentrated acid was then pumped into a freezing crystallization system to allow freezing crystallization at 12°C for 2.0 h to obtain ferrous sulfate heptahydrate crystals with a grade of 85.2% and a recovery rate on ferrous sulfate of 73.22% after sampling detection; while a resulting freezing crystallization mother liquor had an acid concentration of 37.51% and a ferrous sulfate concentration of 6.02%;

further, a filtrate with an acid concentration of 37.51% was pumped into a freezing crystallization system to allow the freezing crystallization at 4°C for 2.0 h to obtain ferrous sulfate heptahydrate crystals with a grade of 87.5% and a secondary recovery rate on ferrous sulfate of 73.86% after sampling detection; while a resulting freezing crystallization mother liquor had an acid concentration of 40.14% and a ferrous sulfate concentration of 1.68%; the freezing crystallization mother liquor was collected into an evaporation feed tank and pumped into a double-effect evaporation device to obtain an acid-salt suspension concentrate; and the acid-salt suspension concentrate overflowed to a maturation cooling tank to allow standing for approximately 10 h, and was then pumped into a membrane filter press through a screw to obtain 85% of a finished acid and the metal miscellaneous salt filter cake. The ferrous sulfate had a total recovery rate of 93.23%.

### Example 4:

A waste acid in titanium dioxide production had an acid concentration of 25.05%, a ferrous sulfate content of 13.78%, and an SS content of 102 mg/L; the waste acid in titanium dioxide production was pumped to a Venturi tower to allow direct-contact heat exchange, evaporation, and pre-concentration with a 360°C rotary kiln tail gas, to obtain a pre-concentrated acid at 75°C with an acid concentration increased to 29.91% and a ferrous sulfate concentration of 16.12%; the pre-concentrated acid was then pumped into a freezing crystallization system to allow freezing crystallization at 15°C for 2.0 h to obtain ferrous sulfate heptahydrate crystals with a grade of 87.8% and a recovery rate on ferrous sulfate of 58.20% after sampling detection; while a resulting freezing crystallization mother liquor had an acid concentration of 36.59% and a ferrous sulfate concentration of 8.73%; the freezing crystallization mother liquor was collected into an evaporation feed tank and then pumped into a double-effect evaporation device to obtain an acid-salt suspension concentrate; the acid-salt suspension concentrate overflowed to a maturation cooling tank to allow standing for approximately 10 h, and was then pumped by a screw into a membrane filter press to obtain 68.2% of a finished acid and a metal miscellaneous salt filter cake.

### Example 5:

A waste acid in titanium dioxide production had an acid concentration of 24.05%, a ferrous sulfate content of 13.78%, and an SS content of 102 mg/L; the waste acid in titanium dioxide production was pumped to a Venturi tower to allow direct-contact heat exchange, evaporation, and pre-concentration with a 360°C rotary kiln tail gas, to obtain a pre-concentrated acid at 50°C with an acid concentration increased to 31.85% and a ferrous sulfate concentration of 18.25%; the pre-concentrated acid was then pumped into a freezing crystallization system to allow freezing crystallization at 10°C for 2.0 h to obtain ferrous sulfate heptahydrate crystals with a grade of 80.2% and a recovery rate on ferrous sulfate of 73.58% after sampling detection; while a resulting freezing crystallization mother liquor had an acid concentration of 42.20% and a ferrous sulfate concentration of 5.92%; the freezing crystallization mother liquor was collected into an evaporation feed tank and then pumped into a double-effect evaporation device to obtain an acid-salt suspension concentrate; the acid-salt suspension concentrate overflowed to a maturation cooling tank to allow standing for approximately 10 h, and was then pumped by a screw into a membrane filter press to obtain 72% of a finished acid and a metal miscellaneous salt filter cake.

### Example 6:

A waste acid in titanium dioxide production had an acid concentration of 20.38%, a ferrous sulfate content of 12.25%, and an SS content of 102 mg/L; the waste acid in titanium dioxide production was pumped to a Venturi tower to allow direct-contact heat exchange, evaporation, and pre-concentration with a 360°C rotary kiln tail gas, to obtain a pre-concentrated acid at 80°C with an acid concentration increased to 27.86% and a ferrous sulfate concentration of 16.72%; the pre-concentrated acid was then pumped into a freezing crystallization system to allow freezing crystallization at 2°C for 2.0 h to obtain ferrous sulfate heptahydrate crystals with a grade of 86.8% and a recovery rate on ferrous sulfate of 91.03% after sampling detection; while a resulting freezing crystallization mother liquor had an acid concentration of 38.63% and a ferrous sulfate concentration of 2.02%; the freezing crystallization mother liquor was collected into an evaporation feed tank and then pumped into a double-effect evaporation device to obtain an acid-salt suspension concentrate; the acid-salt suspension concentrate overflowed to a maturation cooling tank to allow standing for approximately 10 h, and was then pumped by a screw into a membrane filter press to obtain 88.2% of a finished acid and a metal miscellaneous salt filter cake.

The specific effect data of the examples were shown in Table 2.

### Comparative Example:

Samples of the waste acid in titanium dioxide production were collected from two different manufacturers. In order to find out the of low recovery rate of ferrous sulfate in the methods of direct freezing crystallization of waste acid in titanium dioxide production to obtain ferrous sulfate heptahydrate of Patents CN105439105A and CN111517397A, the direct freezing crystallization of waste acid in titanium dioxide production to obtain ferrous sulfate heptahydrate was simulated. Two sets of parallel experimental data were shown in Table 1, and recovery rates of ferrous sulfate were both less than 70%. In order to demonstrate the advancement of the present disclosure, the "pre-concentration + freezing crystallization" process of waste acid in titanium dioxide production was simulated, and two sets of parallel experimental data were shown in Table 2. The minimum recovery rates of ferrous sulfate in Example 1 to Example 5 reached averagely not less than 70%:

**Table 1 Experimental data of direct freezing crystallization**

| Experimental SN | Process | Sample | H₂SO₄ content | FeSO₄ content | FeSO₄ recovery rate |
|---|---|---|---|---|---|
| 1 | Freezing crystallization | Pre-concentrated acid | 22.5% | 12.66% | - |
| | | Freezing crystallization mother liquor | 26.4% | 5.32% | - |
| | | Crystal | - | - | 64.2% |
| 2 | Freezing crystallization | Pre-concentrated acid | 23.1% | 15.11% | - |
| | | Freezing crystallization mother liquor | 28.6% | 5.67% | - |
| | | Crystal | - | - | 69.7% |

**Table 2 Experimental data of "pre-concentration + freezing crystallization"**

| Experimenta l SN | Process | Sample | H₂SO₄ content | FeSO₄ content | FeSO₄·7H₂ O | FeSO₄ recover y rate |
|---|---|---|---|---|---|---|
| Example 1 | Pre-concentratio n | Waste acid in titanium dioxide production | 22.5% | 12.66 % | - | - |
| | | Pre-concentrate d acid | 29.4% | 16.71 % | - | - |
| | Freezing crystallization | Pre-concentrate d acid | 29.4% | 16.71 % | - | - |
| | | Freezing crystallization mother liquor | 40.3% | 2.5% | - | - |
| | | Crystal | - | - | 86.2% | 90.3% |
| Example 2 | Pre-concentratio n | Waste acid in titanium dioxide production | 24.13 % | 15.33 % | - | - |
| | | Pre-concentrate d waste acid | 30.6% | 19.44 % | - | - |
| | Freezing crystallization | Pre-concentrate d acid | 30.6% | 19.44 % | - | - |
| | | Freezing crystallization mother liquor | 45.91 % | 2.22% | - | - |
| | | crystal | - | - | 87.8% | 92% |
| Example 3 | Pre-concentratio n | Waste acid in titanium dioxide production | 24.05 % | 13.78 % | - | - |
| | | Pre-concentrate d acid | 28.85 % | 16.56 % | - | - |
| | Freezing crystallization | Pre-concentrate d acid | 28.85 % | 16.56 % | - | - |
| | | Freezing crystallization mother liquor | 37.51 % | 6.02% | - | - |
| | | Crystal | - | - | 85.2% | 73.22% |
| | | Secondary freezing crystallization mother liquor | 40.14 % | 1.68% | | |
| | | Secondary crystal | | - | 87.5% | 73.86% |
| | | Total recovery rate | | | - | 93.23% |
| Example 4 | Pre-concentratio n | Waste acid in titanium dioxide production | 25.05 % | 13.78 % | - | - |
| | | Pre-concentrate d acid | 29.91 % | 16.12 % | - | - |
| | Freezing crystallization | Pre-concentrate d acid | 29.91 % | 16.12 % | - | - |
| | | Freezing crystallization mother liquor | 36.59 % | 8.73% | - | - |
| | | crystal | - | - | 87.8% | 58.2% |
| Example 5 | Pre-concentratio n | Waste acid in titanium dioxide production | 24.05 % | 13.78 % | - | - |
| | | Pre-concentrate d acid | 31.85 % | 18.25 % | - | - |
| | Freezing crystallization | Pre-concentrate d acid | 31.85 % | 18.25 % | - | - |
| | | Freezing crystallization mother liquor | 42.20 % | 5.92% | - | - |
| | | crystal | - | - | 80.2% | 73.58% |
| Example 6 | Pre-concentratio n | Waste acid in titanium dioxide production | 20.38 % | 12.25 % | - | - |
| | | Pre-concentrate d acid | 27.86 % | 16.72 % | - | - |
| | Freezing crystallization | Pre-concentrate d acid | 27.86 % | 16.72 % | - | - |
| | | Freezing crystallization mother liquor | 38.63 % | 2.02% | - | - |
| | | Crystal | - | - | 86.8% | 91.03% |

The present disclosure may have the following advantages:
1. The process of "pre-concentrating the waste acid in titanium dioxide production and then conducting freezing crystallization" is better than the process of "conducting freezing crystallization, and then transferring to kiln tail gas for concentration". Since the acid concentration and the ferrous sulfate concentration are both increased, according to a rule "the greater the acid concentration, the lower the solubility of ferrous sulfate", favorable conditions are created for subsequent freezing crystallization to obtain ferrous sulfate with the high recovery rate and high grade.
2. Pre-concentration and/or flash evaporation of the rotary kiln tail gas removes part of water, and there is the high recovery rate of ferrous sulfate as mentioned in Advantage 1, such that more ferrous sulfate heptahydrate is precipitated for taking away more iron salts and moisture, thus further increasing the acid concentration. Finally, the acid entering the waste acid concentration system has a concentration starting point that reaches a high value, thereby minimizing the amount of evaporated water required by the subsequent waste acid evaporation and concentration device and saves steam consumption.
3. In the present disclosure, the ferrous sulfate heptahydrate with high purity and high recovery rate and finished acid that meets customer demands can be obtained simultaneously. In addition, a metal miscellaneous salt-enriched filter cake with low ferrous sulfate content can also be obtained separately, and is used for the comprehensive utilization of rare and precious metals such as vanadium, scandium, and manganese.
4. In the present disclosure, the emission of gypsum slag is reduced while recycling ferrous sulfate and waste acid by more than 90% on the original basis, thereby achieving near-zero emission of gypsum slag produced by the sulfuric acid method from titanium dioxide.
5. As shown in Example 1 to 2, when a freezing temperature was 5°C and the waste acid concentration was about 30%, the iron removal rate was above 90%. As shown in Example 3 to 5, the ferrous iron removal rate was about 73% at 10°C to 12°C. When the 10°C freezing crystallization mother liquor was continued to cool to 4°C, the secondary iron removal rate was 73%. After step-by-step cooling, the total iron recovery rate was 93%. That is to say, there was no significant change in the iron recovery rate between one-time cooling and step-by-step cooling, but operating procedures of the crystallization were increased. As shown in Example 4, when the cooling temperature was increased to 15°C, the iron removal rate decreased to not greater than 70%. As shown in Example 6, when the cooling temperature was reduced from 4°C to 2°C, the iron removal rate showed no change, but more work was consumed when the waste acid was reduced from 4°C to 2°C, resulting in increased power consumption. As shown in the above examples, when freezing crystallization was conducted to remove iron from waste acid, the cooling temperature had the greatest impact on the iron removal efficiency, followed by the sulfuric acid concentration in the waste acid, and then the ferrous sulfate content in the starting waste acid.

The above descriptions are only preferred embodiments of the present disclosure and are not intended to limit the present disclosure.

## Claims

1. A method for recycling ferrous sulfate heptahydrate and sulfuric acid from a waste acid in titanium dioxide production, comprising the following steps:
step 1: pre-concentrating the waste acid in titanium dioxide production to obtain a pre-concentrated acid;
step 2: cooling the pre-concentrated acid by a heat exchanger, and conducting freezing crystallization for a period of time to obtain the ferrous sulfate heptahydrate and a crystallization mother liquor;
step 3: concentrating the crystallization mother liquor in a waste acid evaporation system to obtain precipitated miscellaneous salt-containing suspended concentrated acid and evaporation condensed water; and
step 4: subjecting the precipitated miscellaneous salt-containing suspended concentrated acid to maturing and cooling, and then transferring a resulting product into a filter press dehydration system to allow a treatment to obtain a metal miscellaneous salt filter cake and a filtered finished acid; wherein the metal miscellaneous salt filter cake serves as a raw material for extracting precious metals comprising titanium, manganese, magnesium, scandium, and vanadium as well as iron to allow resource recovery, and the filtered finished acid is returned to an ilmenite acid hydrolysis section;
wherein in step 1, the pre-concentrating is conducted by rotary kiln flue gas spraying, the rotary kiln flue gas spraying in series with flash evaporation, or a combination of the flash evaporation, the rotary kiln flue gas spraying, and the flash evaporation in sequence the rotary kiln flue gas spraying concentrates the waste acid in titanium dioxide production to 27.86% to 29.4%.

2. The method for recycling ferrous sulfate heptahydrate and sulfuric acid from a waste acid in titanium dioxide production according to claim 1, wherein the waste acid in titanium dioxide production is at least one selected from the group consisting of a waste acid produced after high-pressure filtration of hydrolyzed metatitanic acid, a waste acid produced after adiabatic flash and the high-pressure filtration of the hydrolyzed metatitanic acid, and a waste acid produced after direct filtration of the hydrolyzed metatitanic acid on blades of a leaf filter; and the waste acid in titanium dioxide production has an acid concentration of 20.38% to 25.05% and a ferrous sulfate concentration of 12.25% to 15.33% in step 1.

3. The method for recycling ferrous sulfate heptahydrate and sulfuric acid from a waste acid in titanium dioxide production according to claim 1, wherein a rotary kiln flue gas is at 300°C to 450°C, and the waste acid in titanium dioxide production pre-concentrated by the rotary kiln flue gas spraying is at 75°C to 85°C in step 1.

4. The method for recycling ferrous sulfate heptahydrate and sulfuric acid from a waste acid in titanium dioxide production according to claim 1 or 2, wherein a device for the freezing crystallization comprises the heat exchanger, a refrigeration unit, a crystallization tank, a centrifuge or a disc filter, a pump unit, and a tank body; and a cold source for the freezing crystallization comprises a crystallization completion liquid of 0°C to 10°C and a water chilling unit in step 2.

5. The method for recycling ferrous sulfate heptahydrate and sulfuric acid from a waste acid in titanium dioxide production according to claim 1 or 2, wherein the freezing crystallization is conducted at 2°C to 12°C for 0.5 h to 3 h; the ferrous sulfate heptahydrate has a grade of 80.2% to 87.8%; and the crystallization mother liquor has an acid concentration increased to 29.91% to 45.91% in step 2.

6. The method for recycling ferrous sulfate heptahydrate and sulfuric acid from a waste acid in titanium dioxide production according to claim 1 or 2, wherein the waste acid evaporation system in step 3 has a concentration device provided with a preheater, a heater, a cooler, a condenser, an evaporator, a maturation cooling tank, a pump unit, and a tank body, and a heat source for evaporation is waste heat derived from a primary steam, a tail gas of titanium dioxide calcination, or a tail gas of acid hydrolysis; and the filter press dehydration system in step 4 is a filtration device being one selected from the group consisting of a membrane filter press, a centrifuge, and a belt filter press combined with supporting facilities thereof.

7. The method for recycling ferrous sulfate heptahydrate and sulfuric acid from a waste acid in titanium dioxide production according to claim 1 or 2, wherein the waste acid evaporation system has an effective number of 1 to 3; and the evaporation condensed water has an acid concentration of less than 0.5%.

8. The method for recycling ferrous sulfate heptahydrate and sulfuric acid from a waste acid in titanium dioxide production according to claim 1 or 2, wherein the precipitated miscellaneous salt-containing suspended concentrated acid has an acid concentration of 50% to 85%.

9. The method for recycling ferrous sulfate heptahydrate and sulfuric acid from a waste acid in titanium dioxide production according to claim 1 or 2, wherein the filtered finished acid obtained in step 4 is pumped into a freezing crystallization system to allow the freezing crystallization at 4°C for 2.0 h to obtain a ferrous sulfate heptahydrate crystal; a resulting freezing crystallization mother liquor is collected into an evaporation feed tank and then pumped into a double-effect evaporation device to obtain an acid-salt suspension concentrate; and the acid-salt suspension concentrate overflows to a maturation cooling tank to allow standing for approximately 10 h, and is then pumped into a membrane filter press through a screw to obtain 85% of a finished acid and the metal miscellaneous salt filter cake.

## Patentansprüche

1. Verfahren zur Wiederverwertung von Eisen(II)-sulfatheptahydrat und Schwefelsäure aus Abfallsäure bei der Titandioxidherstellung, das die folgenden Schritte umfasst:
Schritt 1: Vorkonzentrieren der Abfallsäure bei der Titandioxidproduktion, um eine vorkonzentrierte Säure zu erhalten;
Schritt 2: Abkühlen der vorkonzentrierten Säure durch einen Wärmetauscher und Durchführen einer Gefrierkristallisation über einen Zeitraum hinweg, um das Eisen(II)-sulfatheptahydrat und eine Kristallisationsmutterlauge zu erhalten;
Schritt 3: Aufkonzentrieren der Kristallisationsmutterlauge in einer Abfallsäureverdampfungsanlage, um ausgefällte, verschiedene Salze enthaltende suspendierte konzentrierte Säure und Verdampfungskondensat zu erhalten; und
Schritt 4: Unterziehen der ausgefällten, verschiedene Salze enthaltenden, suspendierten, konzentrierten Säure einer Reifung und Abkühlung und anschließendes Überführen eines resultierenden Produkts in ein Filterpressentrocknungssystem, um eine Behandlung zu ermöglichen, um einen Filterkuchen aus verschiedenen Metallsalzen und eine gefilterte, fertige Säure zu erhalten; wobei der Filterkuchen aus verschiedenen Metallsalzen als Rohmaterial für die Extraktion von Edelmetallen dient, die Titan, Mangan, Magnesium, Scandium und Vanadium sowie Eisen umfassen, um eine Ressourcenrückgewinnung zu ermöglichen, und die gefilterte, fertige Säure zu einem Ilmenit-Säure-Hydrolyseabschnitt zurückgeführt wird;
wobei in Schritt 1 die Vorkonzentrierung durch Drehrohrofen-Rauchgasspritzen, Drehrohrofen-Rauchgasspritzen in Reihe mit einer Entspannungsverdampfung oder durch eine Kombination aus Entspannungsverdampfung, Drehrohrofen-Rauchgasspritzen und Entspannungsverdampfung in Folge durchgeführt wird, wobei das Drehrohrofen-Rauchgasspritzen die Abfallsäure bei der Titandioxidproduktion auf 27,86% bis 29,4% konzentriert.

2. Verfahren zur Wiederverwertung von Eisen(II)-sulfatheptahydrat und Schwefelsäure aus Abfallsäure bei der Titandioxidherstellung nach Anspruch 1, wobei die Abfallsäure bei der Titandioxidherstellung mindestens eine ist, die aus der Gruppe ausgewählt ist, die aus einer nach Hochdruckfiltration von hydrolisierter Metatitansäure erzeugten Abfallsäure, einer nach adiabatischer Entspannung und Hochdruckfiltration der hydrolisierten Metatitansäure erzeugten Abfallsäure und einer nach direkter Filtration der hydrolisierten Metatitansäure auf Blättern eines Blattfilters erzeugten Abfallsäure besteht; und die Abfallsäure bei der Titandioxidherstellung in Schritt 1 eine Säurekonzentration von 20,38 % bis 25,05 % und eine Eisensulfatkonzentration von 12,25 % bis 15,33 % aufweist.

3. Verfahren zur Wiederverwertung von Eisen(II)-sulfatheptahydrat und Schwefelsäure aus Abfallsäure bei der Titandioxidherstellung nach Anspruch 1, wobei ein Drehrohrofen-Rauchgas eine Temperatur von 300°C bis 450°C aufweist und die durch das Drehrohrofen-Rauchgasspritzen vorkonzentrierte Abfallsäure bei der Titandioxidherstellung in Schritt 1 eine Temperatur von 75°C bis 85°C aufweist.

4. Verfahren zur Wiederverwertung von Eisen(II)-sulfatheptahydrat und Schwefelsäure aus Abfallsäure bei der Titandioxidherstellung nach Anspruch 1 oder 2, wobei eine Vorrichtung für die Gefrierkristallisation den Wärmetauscher, eine Kühleinheit, einen Kristallisationstank, eine Zentrifuge oder einen Scheibenfilter, eine Pumpeneinheit und einen Tankkörper umfasst; und eine Kältequelle für die Gefrierkristallisation eine Kristallisationsabschlussflüssigkeit von 0°C bis 10°C und eine Wasserkühleinheit in Schritt 2 umfasst.

5. Verfahren zur Wiederverwertung von Eisen(II)-sulfatheptahydrat und Schwefelsäure aus Abfallsäure bei der Titandioxidherstellung nach Anspruch 1 oder 2, wobei die Gefrierkristallisation bei 2°C bis 12°C für 0,5 h bis 3 h durchgeführt wird; das Eisen(II)-sulfatheptahydrat einen Gehalt von 80,2% bis 87,8% aufweist; und die Kristallisationsmutterlauge eine in Schritt 2 auf 29,91% bis 45,91% erhöhte Säurekonzentration aufweist.

6. Verfahren zur Wiederverwertung von Eisen(II)-sulfatheptahydrat und Schwefelsäure aus Abfallsäure bei der Titandioxid-Herstellung nach Anspruch 1 oder 2, wobei das Abfallsäure-Verdampfungssystem in Schritt 3 eine Konzentrationsvorrichtung aufweist, die mit einem Vorwärmer, einem Heizer, einem Kühler, einem Kondensator, einem Verdampfer, einem Reifekühltank, einer Pumpeneinheit und einem Tankkörper versehen ist, und eine Wärmequelle für die Verdampfung Abwärme ist, die aus einem Primärdampf, einem Abgas der Titandioxid-Kalzinierung oder einem Abgas der Säurehydrolyse abgeleitet ist; und das Filterpressentrocknungssystem in Schritt 4 eine Filtrationsvorrichtung ist, die ausgewählt ist aus der Gruppe, die aus einer Membranfilterpresse, einer Zentrifuge und einer Bandfilterpresse, kombiniert mit deren Unterstützungseinrichtungen, besteht.

7. Verfahren zur Wiederverwertung von Eisen(II)-sulfatheptahydrat und Schwefelsäure aus Abfallsäure bei der Titandioxidherstellung nach Anspruch 1 oder 2, wobei das Abfallsäure-Verdampfungssystem eine effektive Zahl von 1 bis 3 hat und das Verdampfungskondensat eine Säurekonzentration von weniger als 0,5 % aufweist.

8. Verfahren zur Wiederverwertung von Eisen(II)-sulfatheptahydrat und Schwefelsäure aus Abfallsäure bei der Titandioxidherstellung nach Anspruch 1 oder 2, wobei die ausgefällte, verschiedene Salze enthaltende, suspendierte konzentrierte Säure eine Säurekonzentration von 50 % bis 85 % aufweist.

9. Verfahren zur Wiederverwertung von Eisen(II)-sulfatheptahydrat und Schwefelsäure aus Abfallsäure bei der Titandioxidherstellung nach Anspruch 1 oder 2, wobei die in Schritt 4 erhaltene, gefilterte fertige Säure in ein Gefrierkristallisationssystem gepumpt wird, um die Gefrierkristallisation bei 4°C für 2,0 h zu ermöglichen, um einen Eisen(II)-sulfatheptahydrat-Kristall zu erhalten; eine resultierende Gefrierkristallisations-Mutterlauge in einem Verdampfungszufuhrtank gesammelt und dann in eine Doppeleffekt-Verdampfungsvorrichtung gepumpt wird, um ein Säure-Salz-Suspensionskonzentrat zu erhalten; und das Säure-Salz-Suspensionskonzentrat in einen Reifungskühltank überfließt, um ein Stehenlassen für etwa 10 h zu ermöglichen, und dann durch eine Schnecke in eine Membranfilterpresse gepumpt wird, um 85% einer fertigen Säure und des Filterkuchens aus verschiedenen Metallsalzen zu erhalten.

## Revendications

1. Procédé de recyclage d'heptahydrate de sulfate ferreux et d'acide sulfurique à partir d'acide résiduaire dans la production de dioxyde de titane, comprenant les étapes suivantes :
étape 1 : préconcentration de l'acide résiduaire dans la production de dioxyde de titane pour obtenir un acide préconcentré ;
étape 2 : refroidissement de l'acide préconcentré par un échangeur de chaleur et cristallisation par congélation pendant un certain temps afin d'obtenir l'heptahydrate de sulfate ferreux et une liqueur mère de cristallisation ;
étape 3 : concentration de la liqueur mère de cristallisation dans un système d'évaporation d'acide résiduaire afin d'obtenir de l'acide concentré en suspension contenant des sels divers précipités et de l'eau condensée d'évaporation ; et
étape 4 : soumettre l'acide concentré en suspension contenant des sels divers précipités à une maturation et à un refroidissement, puis transférer le produit résultant dans un système de déshydratation par filtre-presse pour permettre un traitement visant à obtenir un gâteau de filtration de sels divers métalliques et un acide fini filtré ; le gâteau de filtration de sels divers métalliques servant de matière première pour l'extraction de métaux précieux comprenant le titane, le manganèse, le magnésium, le scandium et le vanadium ainsi que le fer pour permettre la récupération des ressources, et l'acide fini filtré étant renvoyé dans une section d'hydrolyse de l'acide d'ilménite ;
dans lequel, à l'étape 1, la préconcentration est effectuée par pulvérisation des gaz de combustion du four rotatif, pulvérisation des gaz de combustion du four rotatif en série avec l'évaporation flash, ou une combinaison de l'évaporation flash, de la pulvérisation des gaz de combustion du four rotatif et de l'évaporation flash en séquence, la pulvérisation des gaz de combustion du four rotatif concentrant l'acide résiduaire dans la production de dioxyde de titane à un taux de 27,86 % à 29,4 %.

2. Procédé de recyclage d'heptahydrate de sulfate ferreux et d'acide sulfurique à partir d'acide résiduaire dans la production de dioxyde de titane selon la revendication 1, dans lequel l'acide résiduaire dans la production de dioxyde de titane est au moins l'un choisi dans le groupe constitué d'un acide résiduaire produit après filtration à haute pression de l'acide métatitanique hydrolysé, un acide résiduaire produit après flash adiabatique et filtration à haute pression de l'acide métatitanique hydrolysé, et un acide résiduaire produit après filtration directe de l'acide métatitanique hydrolysé sur des lames d'un filtre à feuilles ; et l'acide résiduaire dans la production de dioxyde de titane a une concentration en acide de 20.38% à 25,05% et une concentration de sulfate ferreux de 12,25% à 15,33% à l'étape 1.

3. Procédé de recyclage d'heptahydrate de sulfate ferreux et d'acide sulfurique à partir d'un acide résiduaire dans la production de dioxyde de titane selon la revendication 1, dans lequel les gaz de combustion du four rotatif sont à une température de 300°C à 450°C, et l'acide résiduaire dans la production de dioxyde de titane pré-concentré par la pulvérisation des gaz de combustion du four rotatif est à une température de 75°C à 85°C à l'étape 1.

4. Procédé de recyclage d'heptahydrate de sulfate ferreux et d'acide sulfurique à partir d'acide résiduaire dans la production de dioxyde de titane selon la revendication 1 ou 2, dans lequel un dispositif pour la cristallisation par congélation comprend l'échangeur de chaleur, une unité de réfrigération, un réservoir de cristallisation, une centrifugeuse ou un filtre à disque, une unité de pompage et un corps de réservoir ; et une source de froid pour la cristallisation par congélation comprend un liquide d'achèvement de cristallisation de 0°C à 10°C et une unité de refroidissement de l'eau à l'étape 2.

5. Procédé de recyclage d'heptahydrate de sulfate ferreux et d'acide sulfurique à partir d'acide résiduaire dans la production de dioxyde de titane selon la revendication 1 ou 2, dans lequel la cristallisation par congélation est effectuée entre 2°C et 12°C pendant 0,5 h à 3 h ; l'heptahydrate de sulfate ferreux a une teneur de 80,2 % à 87,8 % ; et la liqueur mère de cristallisation a une concentration d'acide augmentée de 29,91 % à 45,91 % à l'étape 2.

6. Procédé de recyclage d'heptahydrate de sulfate ferreux et d'acide sulfurique à partir d'acide résiduaire dans la production de dioxyde de titane selon la revendication 1 ou 2, dans lequel le système d'évaporation d'acide résiduaire à l'étape 3 comporte un dispositif de concentration équipé d'un préchauffeur, d'un réchauffeur, d'un refroidisseur, d'un condenseur, d'un évaporateur, d'un réservoir de refroidissement de maturation, d'une unité de pompage et d'un corps de réservoir, et une source de chaleur pour l'évaporation est une chaleur résiduaire dérivée d'une vapeur primaire, d'un gaz résiduaire de la calcination du dioxyde de titane ou d'un gaz résiduaire de l'hydrolyse de l'acide ; et le système de déshydratation du filtre-presse à l'étape 4 est un dispositif de filtration choisi dans le groupe constitué d'un filtre-presse à membrane, d'une centrifugeuse et d'un filtre-presse à bande, combinés à leurs équipements de soutien.

7. Procédé de recyclage d'heptahydrate de sulfate ferreux et d'acide sulfurique à partir d'acide résiduaire dans la production de dioxyde de titane selon la revendication 1 ou 2, dans lequel le système d'évaporation d'acide résiduaire a un nombre effectif de 1 à 3 ; et l'eau condensée d'évaporation a une concentration d'acide inférieure à 0,5 %.

8. Procédé de recyclage d'heptahydrate de sulfate ferreux et d'acide sulfurique à partir d'acide résiduaire dans la production de dioxyde de titane selon la revendication 1 ou 2, dans lequel l'acide concentré en suspension contenant des sels divers précipités a une concentration en acide de 50 % à 85 %.

9. Procédé de recyclage d'heptahydrate de sulfate ferreux et d'acide sulfurique à partir d'acide résiduaire dans la production de dioxyde de titane selon la revendication 1 ou 2, dans lequel l'acide fini filtré obtenu à l'étape 4 est pompé dans un système de cristallisation par congélation pour permettre la cristallisation par congélation à 4°C pendant 2,0 h pour obtenir un cristal d'heptahydrate de sulfate ferreux ; une liqueur mère de cristallisation par congélation est recueillie dans un réservoir d'alimentation par évaporation, puis pompée dans un dispositif d'évaporation à double effet pour obtenir un concentré de suspension acide-sel ; et le concentré de suspension acide-sel déborde dans un réservoir de refroidissement par maturation pour reposer pendant environ 10 h, puis est pompé dans un filtre-presse à membrane à travers une vis pour obtenir 85 % d'un acide fini et le gâteau de filtration de sels divers métalliques.
